# EUROPEAN PATENT APPLICATION

(11) **EP 4 800 979 A1**
(43) Date of publication of application: **02.09.2026**
(21) Application number: 24905949.4
(22) Date of filing: 15.11.2024
(51) Int. Cl.: H04L 9/40, H04L 67/12

(54) **VEHICLE CONTROL METHOD AND APPARATUS, TERMINAL, AND TELEMATICS DEVICE**

(30) Priority: 18.12.2023 CN 202311749851
(71) Applicant: Huawei Technologies Co., Ltd., Shenzhen, Guangdong 518129 (CN)
(72) Inventor: LI, Chunyuan, Shenzhen, Guangdong 518129 (CN); XIE, Tianyuan, Shenzhen, Guangdong 518129 (CN); TONG, Li, Shenzhen, Guangdong 518129 (CN); ZHANG, Chaohui, Shenzhen, Guangdong 518129 (CN)
(74) Representative: Isarpatent
(86) International application number: PCT/CN2024/132472
(87) International publication number: WO 2025/130464

(57) **Abstract**

A vehicle control method and apparatus, a terminal, and a telematics device are disclosed. The method may include: A terminal negotiates with a telematics device of a vehicle through a first link to determine a session key; encrypts a remote vehicle control instruction using the session key; and sends the encrypted remote vehicle control instruction to the telematics device through a second link, where the second link is different from the first link. The terminal negotiates on the session key with the telematics device through the first link, and then transmits the encrypted remote vehicle control instruction through the second link. In other words, the key in this application is obtained through negotiation, and the key cannot be obtained even if a cloud is attacked. In addition, the link used for negotiating on the key is different from the transmission link, and an attacker cannot tamper with the vehicle control instruction even if the cloud is attacked when the instruction is transmitted through the cloud. This ensures security of the vehicle control method.

## Description

This application claims priority to Chinese Patent Application No. 202311749851.1, filed on December 18, 2023 and entitled "VEHICLE CONTROL METHOD AND APPARATUS, TERMINAL, AND TELEMATICS DEVICE", which is incorporated herein by reference in its entirety.

### TECHNICAL FIELD

This application relates to the field of vehicle technologies, and in particular, to a vehicle control method and apparatus, a terminal, and a telematics device.

### BACKGROUND

With intelligentization of vehicles, a driver may remotely control the vehicle through a terminal (for example, a mobile phone) in addition to performing an operation in the vehicle to control the vehicle.

In a related technology, a vehicle control method remotely implemented through a terminal is provided. The method includes: The terminal obtains a key provided by a cloud; the terminal sends an encrypted remote vehicle control instruction to a telematics device (for example, a telematics box (telematics box, T-Box)) of a vehicle through the cloud; and after receiving the remote vehicle control instruction, the telematics device controls the vehicle according to the remote vehicle control instruction.

In the foregoing solution, an attacker may tamper with the remote vehicle control instruction by attacking the cloud. Consequently, the vehicle control method is not secure enough.

### SUMMARY

This application provides a vehicle control method and apparatus, a terminal, and a telematics device, to ensure security of remote vehicle control.

According to a first aspect, this application provides a vehicle control method, performed by a terminal. The method includes:
the terminal negotiates with a telematics device of a vehicle through a first link to determine a session key; the terminal encrypts a remote vehicle control instruction using the session key; and the terminal sends the encrypted remote vehicle control instruction to the telematics device through a second link, where the second link is different from the first link.

In this implementation, the terminal negotiates on the session key with the telematics device through the first link, and then transmits the encrypted remote vehicle control instruction through the second link. In other words, the key in this application is obtained through negotiation, and the key cannot be obtained even if a cloud is attacked. In addition, the link used for negotiating on the key is different from the transmission link, and an attacker cannot tamper with the vehicle control instruction even if the cloud is attacked when the instruction is transmitted through the cloud. This ensures security of the vehicle control method.

For example, the terminal may be a mobile terminal, for example, a mobile phone, a tablet computer, a smartwatch, or another smart wearable device.

For example, the telematics device may be a T-Box.

For example, the first link includes a link between the terminal and a head unit device of the vehicle and a link between the head unit device and the telematics device; or the first link includes a link between the terminal and the telematics device.

For example, the head unit device may be an intelligent cockpit device (for example, an intelligent cockpit domain controller) or another intelligent interaction device that can provide human-machine interaction in the vehicle and that is connected to the telematics device.

For example, the second link includes a link between the terminal and the cloud and a link between the cloud and the telematics device; or the second link includes a link between the terminal and the telematics device.

In some examples, the telematics device and the terminal cannot communicate with each other. Therefore, a third party that is trusted by the telematics device and that can communicate with both the terminal and the telematics device, for example, the head unit device, needs to be relied on to assist in implementing key negotiation. This manner can ensure security of the key negotiation.

In this application, the vehicle control method is described by using an example in which the first link includes the link between the terminal and the head unit device of the vehicle and the link between the head unit device and the telematics device and the second link includes the link between the terminal and the cloud and the link between the cloud and the telematics device.

In this case, the terminal may first establish a binding relationship and then negotiate on the key with the telematics device. When establishing the binding relationship with the telematics device, the terminal negotiates on the session key with the telematics device. Security of the session key obtained by first performing the binding and then performing negotiation can be ensured. When the remote vehicle control instruction is subsequently transmitted through the cloud, the session key obtained through negotiation is used for the encryption. In this way, the attacker cannot tamper with the vehicle control instruction even if the cloud is attacked, thereby ensuring security of the vehicle control method.

The following uses the head unit device as an example to describe a process of binding between the terminal and the telematics device.

The terminal determines a symmetric key between the terminal and the head unit device of the vehicle. The terminal encrypts a binding request using the symmetric key. The terminal sends the encrypted binding request to the head unit device, so that the head unit device decrypts the encrypted binding request and then sends the decrypted binding request to the telematics device. The terminal receives a binding response that is encrypted and forwarded by the head unit device. The binding response is fed back by the telematics device to the head unit device. The terminal decrypts the encrypted binding response using the symmetric key, to complete binding.

In this implementation, the head unit device and the telematics device are connected to each other through an internal network of the vehicle, for example, an in-vehicle Ethernet or an in-vehicle bus. Therefore, security of a line between the head unit device and the telematics device can be ensured. The head unit device and the terminal are connected to each other through a network outside the vehicle. Therefore, security cannot be ensured. Therefore, in this implementation of this application, information transmitted between the terminal and the telematics device is encrypted using the symmetric key, to improve security. Through the foregoing network and information transmission manner, security of the process of the binding between the terminal and the telematics device is ensured.

In the foregoing binding process, the head unit device is responsible for encrypting, decrypting, and forwarding the information transmitted between the terminal and the telematics device. Information from the terminal to the telematics device is first decrypted and then forwarded. Information from the telematics device to the terminal is first encrypted and then forwarded.

In a possible implementation of this application, that the terminal determines the symmetric key between the terminal and the head unit device of the vehicle includes:
the terminal obtains a secret factor that is the same as that of the head unit device; and the terminal determines the symmetric key based on the secret factor.

In this implementation, the secret factor that is the same as that of the head unit device is obtained, and then the terminal determines the symmetric key based on the secret factor, thereby providing a basis for encryption of subsequent information transmission.

In an example, the secret factor includes at least one of an encrypted password, a random salt, a number of iterations, and a unique vehicle identification number.

For example, the secret factor includes the encrypted password, the random salt, the number of iterations, and the unique vehicle identification number.

In another example, the secret factor may alternatively include another parameter. This is not limited in this application.

The terminal and the head unit device may be connected to each other through Bluetooth or a wireless high-fidelity (Wi-Fi) network. After the terminal and the head unit device are connected to each other, the head unit device sends the secret factor to the terminal.

In an example, the encrypted password in the secret factor may be an encrypted password used when the terminal and the head unit device implement the Bluetooth connection or the Wi-Fi connection.

In another example, the encrypted password in the secret factor may be an encrypted password that is separately set, and is entered through a vehicle-mounted large screen or the terminal after the terminal and the head unit device are connected to each other.

After the terminal receives the secret factor, the terminal calculates the symmetric key in a manner that is the same as that of the head unit device. The manner may be a mature key algorithm in a related technology, or a key algorithm designed based on an encryption requirement in this application. This is not limited in this application.

The key algorithm may be stored in the terminal and the head unit device in advance, or may be determined through negotiation after the terminal and the head unit device are connected to each other. This is not limited in this application.

Correspondingly, in addition to the terminal determining the symmetric key based on the secret factor, the terminal also determines the symmetric key based on the secret factor. Because the determining manners are the same, the keys determined by the terminal and the head unit device are the same. In this manner, the key is not directly transmitted, avoiding an exposure risk, and key consistency is also ensured.

In another possible implementation of this application, content of the secret factor transmitted between the terminal and the head unit device may include more or fewer parameters, or the secret factor is transmitted by the terminal to the head unit device, or the like. These implementation details are not excessively limited in this application.

In a possible implementation of this application, that the terminal encrypts the remote vehicle control instruction using the session key includes:
the terminal encrypts the remote vehicle control instruction and a first count value using the session key, so that the telematics device verifies authority of the remote vehicle control instruction based on the first count value, where the first count value is a count value of the remote vehicle control instruction.

In this implementation, the first count value is encrypted together with the remote vehicle control instruction, and then the encrypted remote vehicle control instruction and first count value are sent together. In this way, when receiving the remote vehicle control instruction, the telematics device performs the authority verification based on the first count value received together. The first count value gradually increases with a number of instructions sent by the terminal to the telematics device. Therefore, whether the instruction is a normal instruction or a replay attack can be determined by verifying the first count value, thereby improving security.

In an example, the remote vehicle control instruction and the first count value are encrypted as a whole. In another example, the remote vehicle control instruction and the first count value are separately encrypted. To be specific, the remote vehicle control instruction and the first count value may be used as one message or data packet, or may be divided into different messages and data packets. However, after division, it needs to be ensured that the remote vehicle control instruction and the first count value can be associated with or correspond to each other.

In another possible implementation of this application, the terminal encrypts the remote vehicle control instruction without including the first count value. This can reduce a message size of the to-be-transmitted instruction and reduce a bandwidth requirement.

In addition to the remote vehicle control instruction, vehicle status information may be further transmitted between the terminal and the telematics device.

In a possible implementation of this application, the method further includes:
the terminal receives, through the second link, encrypted vehicle status information and second count value that are sent by the telematics device, where the second count value is a count value of vehicle status information; the terminal decrypts the encrypted vehicle status information and second count value using the session key, to obtain the vehicle status information and the second count value; and the terminal verifies authority of the vehicle status information based on the second count value.

In this implementation, the second count value is encrypted together with the vehicle status information, and then the encrypted vehicle status information and second count value are sent together. In this way, when receiving the vehicle status information, the terminal performs the authority verification based on the second count value received together. The second count value gradually increases with a number of pieces of vehicle status information sent by the telematics device to the terminal. Therefore, whether the vehicle status information is normal information or a replay attack can be determined by verifying the second count value, thereby improving security.

In an example, the vehicle status information and the second count value are encrypted as a whole. In another example, the vehicle status information and the second count value are separately encrypted. To be specific, the vehicle status information and the second count value may be used as one message or data packet, or may be divided into different messages and data packets. However, after division, it needs to be ensured that the vehicle status information and the second count value can be associated with or correspond to each other.

In another possible implementation of this application, the telematics device encrypts the vehicle status information without including the second count value. This can reduce a message size of the to-be-transmitted information and reduce a bandwidth requirement.

In a possible implementation of this application, after negotiating with the telematics device to determine the session key, the terminal always uses a same session key for information encryption. In this manner, a processing amount of determining, by the terminal and the telematics device, the key that needs to be used is small.

In another possible implementation of this application, after negotiating with the telematics device to determine the session key, the terminal periodically updates the used session key, thereby further improving security.

In an example, the terminal updates the session key in the following manner: The terminal periodically updates the session key with the telematics device through negotiation. In other words, the terminal periodically negotiates with the telematics device, and then uses a latest session key obtained through negotiation.

In another example, the terminal updates the session key in the following manner: The terminal negotiates with the telematics device to obtain a plurality of session keys; and the terminal periodically updates the used session key based on the plurality of session keys. In other words, the terminal negotiates with the telematics device to obtain the plurality of session keys, then selects a to-be-used session key from the plurality of session keys, and periodically changes the used session key. Certainly, in this example, the terminal may still periodically negotiate with the telematics device, but a difference from a 1^{st} example is that a plurality of session keys are obtained through negotiation each time, and then a session key is changed between two negotiation cycles.

The vehicle control method performed by the terminal is described above, and corresponds to a vehicle control method for a telematics device. Because the vehicle control methods on the two sides correspond to each other, steps of the methods performed by the two sides also correspond to each other. Refer to the following second aspect.

According to a second aspect, this application provides a vehicle control method. A vehicle includes a telematics device. The method is performed by the telematics device of the vehicle. The method includes:
the telematics device negotiates with a terminal through a first link to determine a session key; the telematics device receives, through a second link, an encrypted remote vehicle control instruction sent by the terminal, where the second link is different from the first link; the telematics device decrypts the encrypted remote vehicle control instruction using the session key, to obtain the remote vehicle control instruction; and the telematics device controls the vehicle according to the remote vehicle control instruction.

Optionally, the first link includes a link between the terminal and a head unit device of the vehicle and a link between the head unit device and the telematics device; or
the first link includes a link between the terminal and the telematics device.

Optionally, when the first link includes the link between the terminal and the head unit device and the link between the head unit device and the telematics device, the method further includes:
the telematics device receives a binding request sent by the terminal through the head unit device; and the telematics device sends a binding response to the head unit device, so that the head unit device encrypts and forwards the binding response to the terminal, to complete binding.

Optionally, that the telematics device receives, through the second link, the encrypted remote vehicle control instruction sent by the terminal includes:
the telematics device receives, through the second link, encrypted remote vehicle control instruction and first count value that are sent by the terminal, where the first count value is a count value of the remote vehicle control instruction.

The method further includes:
the terminal verifies authority of the remote vehicle control instruction based on the first count value.

Optionally, the method further includes:
the telematics device encrypts vehicle status information and a second count value using the session key, so that the terminal verifies authority of the vehicle status information based on the second count value, where the second count value is a count value of the vehicle status information; and the terminal sends the encrypted vehicle status information and second count value to the terminal through the second link.

Optionally, the second link includes a link between the terminal and a cloud and a link between the cloud and the telematics device; or
the second link includes a link between the terminal and the telematics device.

Optionally, the method further includes:
the telematics device periodically updates the session key with the terminal through negotiation; or
the telematics device negotiates with the terminal to obtain a plurality of session keys, where the method further includes: The telematics device periodically updates the used session key based on the plurality of session keys.

According to a third aspect, this application provides a vehicle control apparatus. The apparatus includes:
a key negotiation unit, configured to negotiate with a telematics device of a vehicle through a first link to determine a session key;
an encryption and decryption unit, configured to encrypt a remote vehicle control instruction using the session key; and
a transmission unit, configured to send the encrypted remote vehicle control instruction to the telematics device through a second link, where the second link is different from the first link.

Optionally, the first link includes a link between the apparatus and a head unit device of the vehicle and a link between the head unit device and the telematics device; or
the first link includes a link between the apparatus and the telematics device.

Optionally, when the first link includes the link between the apparatus and the head unit device and the link between the head unit device and the telematics device, the apparatus further includes a binding unit, configured to determine a symmetric key between the apparatus and the head unit device of the vehicle.

The encryption and decryption unit is further configured to encrypt a binding request using the symmetric key.

The transmission unit is further configured to: send the encrypted binding request to the head unit device, so that the head unit device decrypts the encrypted binding request and then sends the decrypted binding request to the telematics device; and receive a binding response encrypted and forwarded by the head unit device, where the binding response is fed back by the telematics device to the head unit device.

The binding unit is further configured to decrypt the encrypted binding response using the symmetric key, to complete binding.

Optionally, the transmission unit is further configured to obtain a secret factor that is the same as that of the head unit device.

The binding unit is configured to determine the symmetric key based on the secret factor.

Optionally, the encryption and decryption unit is configured to encrypt the remote vehicle control instruction and a first count value using the session key, so that the telematics device verifies authority of the remote vehicle control instruction based on the first count value, where the first count value is a count value of the remote vehicle control instruction.

Optionally, the transmission unit is further configured to receive, through the second link, encrypted vehicle status information and second count value that are sent by the telematics device, where the second count value is a count value of the vehicle status information.

The encryption and decryption unit is further configured to: decrypt the encrypted vehicle status information and second count value using the session key, to obtain the vehicle status information and the second count value; and verify authority of the vehicle status information based on the second count value.

Optionally, the second link includes a link between the apparatus and a cloud and a link between the cloud and the telematics device; or
the second link includes a link between the apparatus and the telematics device.

Optionally, the key negotiation unit is further configured to periodically update the session key with the telematics device through negotiation; or
negotiate with the telematics device to obtain a plurality of session keys, where the key negotiation unit is further configured to periodically update the used session key based on the plurality of session keys.

According to a fourth aspect, this application provides a vehicle control apparatus. The apparatus includes:
a key negotiation unit, configured to negotiate with a terminal through a first link to determine a session key;
a transmission unit, configured to receive, through a second link, an encrypted remote vehicle control instruction sent by the terminal, where the second link is different from the first link;
an encryption and decryption unit, configured to decrypt the encrypted remote vehicle control instruction using the session key, to obtain the remote vehicle control instruction; and
a control unit, configured to control a vehicle according to the remote vehicle control instruction.

Optionally, the first link includes a link between the terminal and a head unit device of the vehicle and a link between the head unit device and the apparatus; or
the first link includes a link between the terminal and the apparatus.

Optionally, when the first link includes the link between the terminal and the head unit device and the link between the head unit device and the apparatus, the transmission unit is further configured to: receive a binding request sent by the terminal through the head unit device of the vehicle; and send a binding response to the head unit device, so that the head unit device encrypts and forwards the binding response to the terminal, to complete binding.

Optionally, the transmission unit is configured to receive, through the second link, encrypted remote vehicle control instruction and first count value that are sent by the terminal, where the first count value is a count value of the remote vehicle control instruction.

The encryption and decryption unit is configured to verify authority of the remote vehicle control instruction based on the first count value.

Optionally, the encryption and decryption unit is further configured to encrypt vehicle status information and a second count value using the session key, so that the terminal verifies authority of the vehicle status information based on the second count value, where the second count value is a count value of the vehicle status information. The transmission unit is further configured to send the encrypted vehicle status information and second count value to the terminal through the second link.

Optionally, the second link includes a link between the terminal and a cloud and a link between the cloud and the apparatus; or
the second link includes a link between the terminal and the apparatus.

Optionally, the key negotiation unit is further configured to periodically update the session key with the terminal through negotiation; or
negotiate with the terminal to obtain a plurality of session keys, where the key negotiation unit is further configured to periodically update the used session key based on the plurality of session keys.

According to a fifth aspect, an electronic device is provided. The electronic device includes a processor and a memory. The memory is configured to store a software program and a module.

In an example, the electronic device may be a terminal. Correspondingly, the processor implements the method according to any one of the first aspect or the possible implementations of the first aspect by running or executing the software program and/or the module stored in the memory.

In another example, the electronic device may be a head unit device. Correspondingly, the processor implements the method according to any one of the second aspect or the possible implementations of the second aspect by running or executing the software program and/or the module stored in the memory.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into a same chip, or may be respectively disposed on different chips. A type of the memory and a manner of disposing the memory and the processor are not limited in this application.

According to a sixth aspect, a computer program product is provided. The computer program product includes computer program code. When the computer program code is run by a computer, the computer is enabled to perform the method according to any one of the first aspect or the possible implementations of the first aspect, or perform the method according to any one of the second aspect or the possible implementations of the second aspect.

According to a seventh aspect, this application provides a computer-readable storage medium. The computer-readable storage medium is configured to store program code to be executed by a processor. The program code is used to implement the method according to any one of the first aspect or the possible implementations of the first aspect, or implement the method according to any one of the second aspect or the possible implementations of the second aspect.

According to an eighth aspect, a chip is provided, including a processor. The processor is configured to: invoke, from a memory, instructions stored in the memory, and run the instructions, to enable a communication device in which the chip is installed to perform the method according to any one of the first aspect or the possible implementations of the first aspect, or perform the method according to any one of the second aspect or the possible implementations of the second aspect.

According to a ninth aspect, another chip is provided. The another chip includes an input interface, an output interface, a processor, and a memory. The input interface, the output interface, the processor, and the memory are connected to each other through an internal connection path. The processor is configured to execute code in the memory. When the code is executed, the processor is configured to perform the method according to any one of the first aspect or the possible implementations of the first aspect, or perform the method according to any one of the second aspect or the possible implementations of the second aspect.

According to a tenth aspect, a vehicle is provided. The vehicle includes the vehicle control apparatus according to any one of the fourth aspect or the possible implementations of the fourth aspect.

According to an eleventh aspect, a vehicle control system is provided. The system includes the terminal according to any one of the foregoing aspects and the head unit device according to any one of the foregoing aspects.

### BRIEF DESCRIPTION OF DRAWINGS

FIG. 1 is a diagram of a system architecture according to an embodiment of this application;
FIG. 2 is a flowchart of a vehicle control method according to an embodiment of this application;
FIG. 3 is a flowchart of a vehicle control method according to an embodiment of this application;
FIG. 4 is a flowchart of a vehicle control method according to an embodiment of this application;
FIG. 5 is a flowchart of vehicle control according to an embodiment of this application;
FIG. 6 is a diagram of a module of a head unit device according to an embodiment of this application;
FIG. 7 is a diagram of a module of a cloud according to an embodiment of this application;
FIG. 8 is a flowchart of a vehicle control method according to an embodiment of this application;
FIG. 9 is a block diagram of a vehicle control apparatus according to an embodiment of this application;
FIG. 10 is a block diagram of a vehicle control apparatus according to an embodiment of this application; and
FIG. 11 is a diagram of a structure of a device according to an embodiment of this application.

### DESCRIPTION OF EMBODIMENTS

To make objectives, technical solutions, and advantages of this application clearer, the following further describes implementations of this application in detail with reference to accompanying drawings.

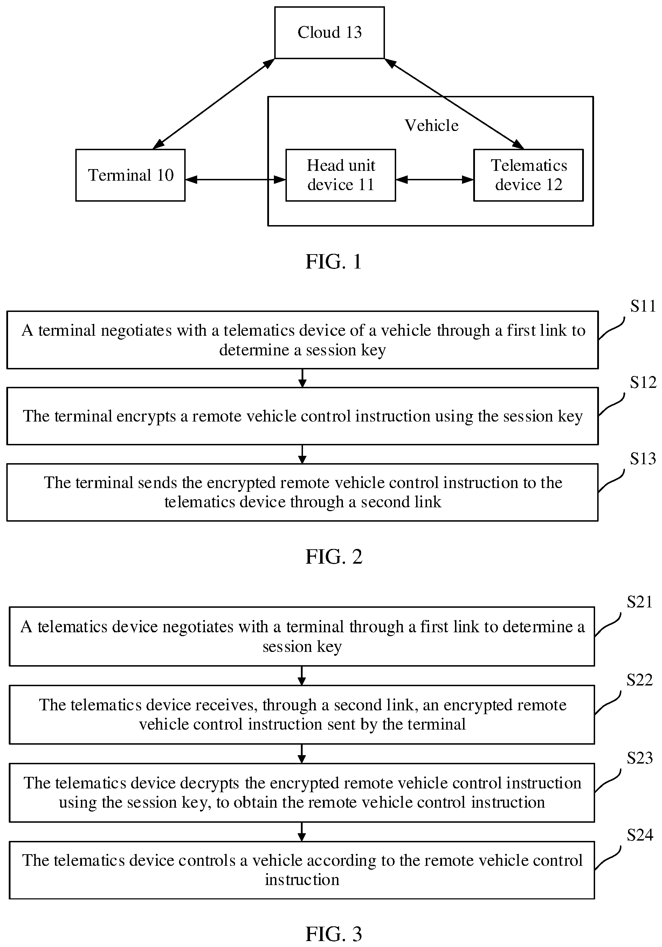

To facilitate understanding of the technical solutions provided in embodiments of this application, a system architecture in this application is first described with reference to FIG. 1 and FIG. 2.

FIG. 1 is a diagram of a system architecture according to an embodiment of this application. Refer to FIG. 1. The system architecture includes a terminal 10, a head unit device 11, a telematics device 12, and a cloud 13.

The head unit device 11 and the telematics device 12 belong to a same vehicle. The head unit device 11 and the telematics device 12 are connected to each other through an internal network of the vehicle. For example, the head unit device 11 and the telematics device 12 are connected to each other through an in-vehicle Ethernet or an in-vehicle bus.

The head unit device 11 and the terminal 10 are connected to each other through a network outside the vehicle. For example, the head unit device 11 and the terminal 10 may be connected to each other through Bluetooth or a wireless fidelity (Wi-Fi) network.

The terminal 10 and the telematics device 12 are further connected to the cloud 13. The cloud 13 may be a vehicle cloud platform.

For example, the terminal 10 may be a mobile terminal, for example, a mobile phone, a tablet computer, a smartwatch, or another smart wearable device.

For example, the head unit device 11 may be an intelligent cockpit device (for example, an intelligent cockpit domain controller) or another intelligent interaction device that can provide human-machine interaction in the vehicle and that is connected to the telematics device.

For example, the telematics device 12 may be a T-Box.

In this embodiment of this application, the system architecture belongs to a vehicle. In addition to a vehicle that travels on a road, the vehicle herein may further include a vehicle having a flight function and a vehicle having a navigation function. In addition, these vehicles are not limited to a shape, and may be, for example, a vehicle in another form, for example, a flight vehicle or an aircraft. A form of the vehicle is not limited in this application.

FIG. 2 is a flowchart of a vehicle control method according to an embodiment of this application. The method is applied to the foregoing terminal. To be specific, the method may be performed by the terminal in the system architecture shown in FIG. 1. As shown in FIG. 2, the method includes the following steps.

S11: The terminal negotiates with a telematics device of a vehicle through a first link to determine a session key.

For example, the first link includes a link between the terminal and a head unit device of the vehicle and a link between the head unit device and the telematics device; or the first link includes a link between the terminal and the telematics device.

The first link between the terminal and the telematics device may be a direct link, or may be an indirect link that does not pass through the head unit device.

S12: The terminal encrypts a remote vehicle control instruction using the session key.

In this embodiment of this application, the remote vehicle control instruction may be a vehicle start instruction, a vehicle air conditioner control instruction, a vehicle seat adjustment instruction, or the like. A type of the remote vehicle control instruction is not limited in this application.

S13: The terminal sends the encrypted remote vehicle control instruction to the telematics device through a second link, where the second link is different from the first link.

For example, the second link includes a link between the terminal and a cloud and a link between the cloud and the telematics device; or the second link includes a link between the terminal and the telematics device.

The second link between the terminal and the telematics device may be a direct link, or may be an indirect link that does not pass through the cloud.

Even if both the first link and the second link include the links between the terminal and the telematics device, the first link and the second link may pass through different intermediate nodes or use different protocols. In these cases, the first link and the second link are still different links.

In this embodiment of this application, the terminal negotiates on the session key with the telematics device through the first link, and then transmits the encrypted remote vehicle control instruction through the second link. In other words, the key in this application is obtained through negotiation, and the key cannot be obtained even if the cloud is attacked. In addition, the link used for negotiating on the key is different from the transmission link, and an attacker cannot tamper with the vehicle control instruction even if the cloud is attacked when the instruction is transmitted through the cloud. This ensures security of the vehicle control method.

FIG. 3 is a flowchart of a vehicle control method according to an embodiment of this application. The method is applied to the foregoing vehicle. The method may be performed by the telematics device in the system architecture shown in FIG. 1. As shown in FIG. 3, the method includes the following steps.

S21: The telematics device negotiates with a terminal through a first link to determine a session key.

S22: The telematics device receives, through a second link, an encrypted remote vehicle control instruction sent by the terminal, where the second link is different from the first link.

S23: The telematics device decrypts the encrypted remote vehicle control instruction using the session key, to obtain the remote vehicle control instruction.

S24: The telematics device controls the vehicle according to the remote vehicle control instruction.

For example, if the remote vehicle control instruction is a vehicle start instruction, the telematics device starts the vehicle according to the remote vehicle control instruction.

For another example, if the remote vehicle control instruction is a vehicle air conditioner control instruction, the telematics device controls running of an air conditioner in the vehicle according to the remote vehicle control instruction.

For another example, if the remote vehicle control instruction is a vehicle seat adjustment instruction, the telematics device adjusts a status of a seat in the vehicle according to the remote vehicle control instruction.

In this embodiment of this application, the telematics device negotiates on the session key with the terminal through the first link, and then transmits the encrypted remote vehicle control instruction through the second link. In other words, the key in this application is obtained through negotiation, and the key cannot be obtained even if a cloud is attacked. In addition, the link used for negotiating on the key is different from the transmission link, and an attacker cannot tamper with the vehicle control instruction even if the cloud is attacked when the instruction is transmitted through the cloud. This ensures security of the vehicle control method.

The following describes a vehicle control method by using an example in which a first link includes a link between a terminal and a head unit device of a vehicle and a link between the head unit device and a telematics device and a second link includes a link between the terminal and a cloud and a link between the cloud and the telematics device. When the first link and the second link are other links, a process of the vehicle control method is the same. Only details need to be adaptively adjusted based on a difference between the links. For example, steps performed by the head unit device and the cloud are removed, or steps performed by the head unit device or the cloud are transferred to another node on the link.

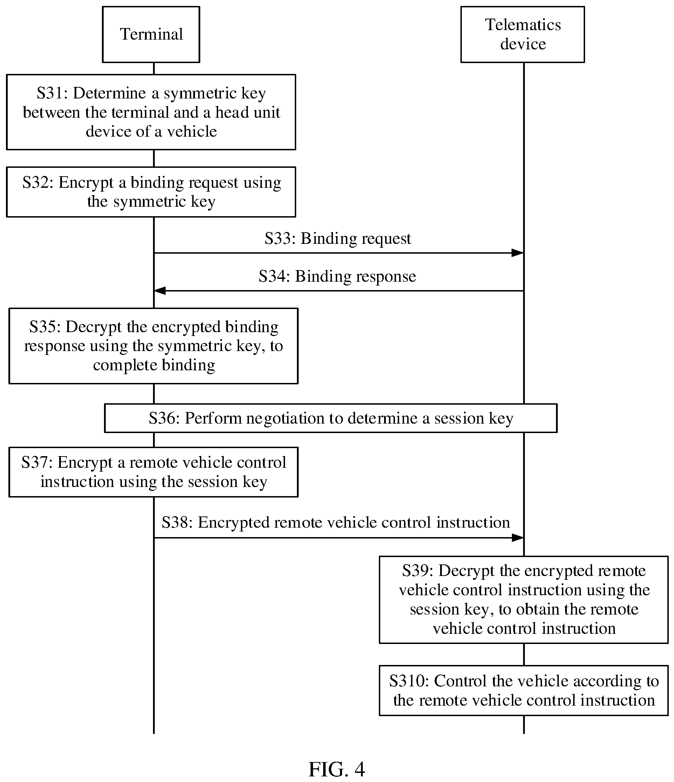

FIG. 4 is a flowchart of a vehicle control method according to an embodiment of this application. The method is applied to the foregoing vehicle. The method may be jointly performed by the terminal and the telematics device in the system architecture shown in FIG. 1. As shown in FIG. 4, the method includes the following steps.

S31: The terminal determines a symmetric key between the terminal and a head unit device of the vehicle.

In a possible implementation of this application, that the terminal determines the symmetric key between the terminal and the head unit device of the vehicle includes:
the terminal obtains a secret factor that is the same as that of the head unit device; and the terminal determines the symmetric key based on the secret factor.

In this implementation, the secret factor that is the same as that of the head unit device is obtained, and then the terminal determines the symmetric key based on the secret factor, thereby providing a basis for encryption of subsequent information transmission.

In an example, the secret factor includes at least one of an encrypted password, a random salt, a number of iterations, and a unique vehicle identification number.

For example, the secret factor includes the encrypted password, the random salt, the number of iterations, and the unique vehicle identification number.

In another example, the secret factor may alternatively include another parameter. This is not limited in this application.

The terminal and the head unit device may be connected to each other through Bluetooth or a wireless high-fidelity (Wi-Fi) network. After the terminal and the head unit device are connected to each other, the head unit device sends the secret factor to the terminal.

In an example, the encrypted password in the secret factor may be an encrypted password used when the terminal and the head unit device implement the Bluetooth connection or the Wi-Fi connection.

In another example, the encrypted password in the secret factor may be an encrypted password that is separately set, and is entered through a vehicle-mounted large screen or the terminal after the terminal and the head unit device are connected to each other.

After the terminal receives the secret factor, the terminal calculates the symmetric key in a manner that is the same as that of the head unit device. The manner may be a mature key algorithm in a related technology, or a key algorithm designed based on an encryption requirement in this application. This is not limited in this application.

The key algorithm may be stored in the terminal and the head unit device in advance, or may be determined through negotiation after the terminal and the head unit device are connected to each other. This is not limited in this application.

Correspondingly, in addition to the terminal determining the symmetric key based on the secret factor, the terminal also determines the symmetric key based on the secret factor. Because the determining manners are the same, the keys determined by the terminal and the head unit device are the same. In this manner, the key is not directly transmitted, avoiding an exposure risk, and key consistency is also ensured.

In another possible implementation of this application, content of the secret factor transmitted between the terminal and the head unit device may include more or fewer parameters, or the secret factor is transmitted by the terminal to the head unit device, or the like. These implementation details are not excessively limited in this application.

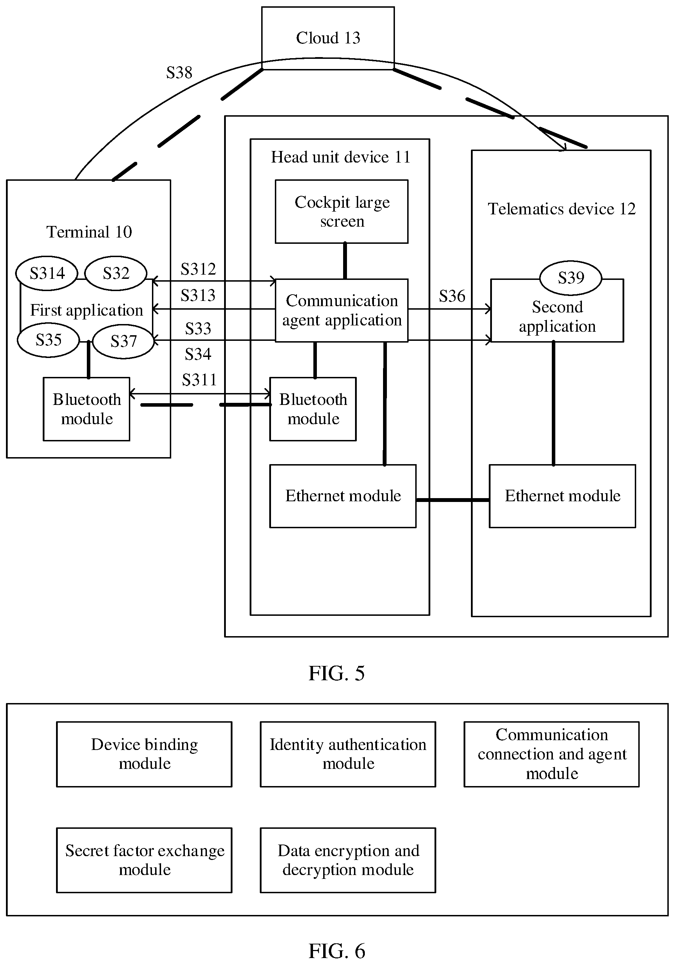

FIG. 5 is a flowchart of vehicle control according to an embodiment of this application. Refer to FIG. 5. For example, the terminal 10 is a mobile phone, the head unit device 11 is an intelligent cockpit, and the telematics device 12 is a T-Box. The terminal 10 includes a first application and a Bluetooth module. The head unit device 11 includes a cockpit large screen, a communication agent application, a Bluetooth module, and an Ethernet module. The telematics device 12 includes a second application and an Ethernet module. The first application, the communication agent application, and the second application are all responsible for implementing functions such as communication connection establishment and data encryption and decryption. The following describes a detailed process of step S31 with reference to the structure in FIG. 5.

S311: The Bluetooth module of the terminal is paired with the Bluetooth module of the head unit device to establish a communication channel.

S312: The first application of the terminal and the communication agent application of the head unit device enter a device authentication pairing interface, a two-dimensional code is provided on the cockpit large screen of the head unit device, and the terminal scans the two-dimensional code to complete authentication. Alternatively, the terminal and the head unit device respectively obtain a preset password entered by a user, and if the obtained preset passwords are the same, the authentication is completed.

A maximum number of times of trial and error may be set for the preset password. The number of times of trial and error for the preset password between the terminal and the head unit device is limited, to avoid a potential attack.

Although S312 is performed between the first application and the communication agent application in FIG. 5, S312 still needs to be performed through a path established by the Bluetooth module. A transmission path in S312 is as follows: the first application-the Bluetooth module of the terminal 10-the Bluetooth module of the head unit device 11-the communication agent application.

S313: The terminal obtains, through the first application, the secret factor that is the same as that of the head unit device.

In an example, the terminal and the head unit device respectively obtain a secret factor entered by the user. In this case, the secret factor may be generated by a user input.

In another example, the terminal scans a two-dimensional code provided on the cockpit large screen of the head unit device, to obtain the secret factor shared by the head unit device. In this case, the secret factor may be automatically generated by the head unit device, or may be generated by the head unit device in combination with a user input.

The secret factor includes the encrypted password (password, pwd), the random salt (salt), the number (n) of iterations, and the unique vehicle identification number (VIN).

For example, the number of iterations is related to strength of the generated symmetric key. Generally, 1024 or 2048 may be selected, to ensure the key strength without occupying excessive computing power resources.

Although S313 is performed between the first application and the communication agent application in FIG. 5, S313 still needs to be performed through a path established by the Bluetooth module. A transmission path in S313 is as follows: transmission performed on a path of the communication agent application-the Bluetooth module of the head unit device 11-the Bluetooth module of the terminal 10-the first application.

S314: The terminal calculates the symmetric through the first application based on the secret factor.

For example, the symmetric key UK (User Key)=PBKDF2 (pwd||VIN, salt, n). Because the VIN is used in a process of calculating the symmetric key, and the VIN is the unique vehicle identification number, the foregoing key determining may also be considered as preliminary binding between the terminal and the telematics device.

In the foregoing process, the terminal and the head unit device first establish a basic communication link through Bluetooth, and then complete secret factor exchange and key generation. The symmetric key may be used for subsequent identity authentication and data transmission protection between the terminal and the head unit device. The head unit device and the telematics device in the vehicle perform intra-domain communication, and Ethernet communication may be used for a communication link, and is trusted communication. Therefore, the terminal and the telematics device establish a secure communication link through the head unit device as a communication agent, to negotiate on a session key between the terminal and the head unit device.

FIG. 6 is a diagram of modules of a head unit device according to an embodiment of this application. Refer to FIG. 6. The modules may be modules included in a communication agent application on the head unit device. The communication agent application includes a device binding module, an identity authentication module, a communication connection and agent module, a secret factor exchange module, and a data encryption and decryption module. The foregoing modules can resolve a trust issue between a user terminal and the telematics device, and assist in key negotiation between the terminal and the telematics device.

S32: The terminal encrypts a binding request using the symmetric key.

After a secure channel between the terminal and the telematics device is established, the terminal may generate and encrypt the binding request in a case of manual triggering of the user. Alternatively, the terminal may generate and encrypt the binding request in a case of automatic triggering.

For example, the binding request may include terminal information and telematics device information. For example, the terminal information is a user identifier or a terminal identifier, and the telematics device information may be the foregoing VIN.

S33: The terminal sends the encrypted binding request to the head unit device, so that the head unit device decrypts the encrypted binding request and sends the decrypted binding request to the telematics device; and the telematics device receives the binding request sent by the terminal through the head unit device of the vehicle.

After the secure channel is established, a process of information transmission from the terminal to the telematics device remains unchanged. Refer to FIG. 5. A transmission path of information such as the binding request in S33 is as follows: the first application-the Bluetooth module of the terminal 10-the Bluetooth module of the head unit device 11-the communication agent application-the Ethernet module of the head unit device 11- the Ethernet module of the telematics device 12-the second application.

S34: The telematics device sends a binding response to the head unit device, so that the head unit device encrypts and forwards the binding response to the terminal; and the terminal receives the binding response encrypted and forwarded by the head unit device.

After the secure channel is established, a process of information transmission from the telematics device to the terminal remains unchanged. Refer to FIG. 5. A transmission path of information such as the binding response in S34 is as follows: the second application-the Ethernet module of the telematics device 12-the Ethernet module of the head unit device 11-the communication agent application-the Bluetooth module of the head unit device 11-the Bluetooth module of the terminal 10-the first application.

S35: The terminal decrypts the encrypted binding response using the symmetric key, to complete binding.

In this implementation, the head unit device and the telematics device are connected to each other through an internal network of the vehicle, for example, an in-vehicle Ethernet or an in-vehicle bus. Therefore, security of a line between the head unit device and the telematics device can be ensured. The head unit device and the terminal are connected to each other through a network outside the vehicle. Therefore, security cannot be ensured. Therefore, in this implementation of this application, information transmitted between the terminal and the telematics device is encrypted using the symmetric key, to improve security. Through the foregoing network and information transmission manner, security of the process of the binding between the terminal and the telematics device is ensured.

In this embodiment of this application, a trust relationship between the terminal and the telematics device does not depend on a cloud, the binding is completed in a near field communication scenario, and the cloud cannot change a device binding relationship.

S36: The terminal negotiates with the telematics device to determine the session key.

In this embodiment of this application, the terminal negotiates on the key with the telematics device according to a mature key negotiation algorithm, or the terminal negotiates on the key with the telematics device according to a customized key negotiation algorithm.

For example, the terminal and the telematics device negotiate on the key according to an elliptic curve Diffie-Hellman key exchange (elliptic curve Diffie-Hellman key exchange, ECDH) algorithm.

When the key is negotiated on according to the ECDH algorithm, the terminal and the telematics device use certificates as trust roots between the devices. The terminal sends the certificate, an algorithm suite, and a random number to the telematics device. The telematics device sends the certificate, an algorithm suite, and a random number to the terminal. When being transmitted between the terminal and the head unit device, the certificates, the algorithm suites, and the random numbers are encrypted using the symmetric key.

After the certificates are exchanged, the terminal and the telematics device verify authority of the peer certificates, and continue to perform negotiation only when the peer certificates are authorized, or stop negotiation when the peer certificates are unauthorized.

After the certificate authentication is completed, the terminal and the telematics device extract public keys from the peer certificates.

After the certificate authentication is completed, the terminal and the telematics device generate a temporary public key respectively and exchange the temporary public keys. In an exchange process, encryption is first performed using the public keys extracted from the certificates or the temporary public keys, and secondary encryption still needs to be performed using the symmetric key during passing through of the link between the terminal and the head unit device.

After the temporary public keys are exchanged, the terminal and the telematics device negotiate using the temporary public keys, to generate a same session key that is also referred to as a master key (Master Key).

Although S36 is performed between the first application and the second application in FIG. 5, S36 still needs to be performed through a path established by the Bluetooth module and the Ethernet module. A transmission path in S36 is as follows: the first application-the Bluetooth module of the terminal 10-the Bluetooth module of the head unit device 11-the communication agent application-the Ethernet module of the head unit device 11-the Ethernet module of the telematics device 12 -the second application.

S37: The terminal encrypts a remote vehicle control instruction using the session key.

In a possible implementation of this application, that the terminal encrypts the remote vehicle control instruction using the session key includes:
the terminal encrypts the remote vehicle control instruction and a first count value using the session key, so that the telematics device verifies authority of the remote vehicle control instruction based on the first count value, where the first count value is a count value of the remote vehicle control instruction.

In this implementation, the first count value is encrypted together with the remote vehicle control instruction, and then the encrypted remote vehicle control instruction and first count value are sent together. In this way, when receiving the remote vehicle control instruction, the telematics device performs the authority verification based on the first count value received together. The first count value gradually increases with a number of instructions sent by the terminal to the telematics device. Therefore, whether the instruction is a normal instruction or a replay attack can be determined by verifying the first count value, thereby improving security.

The first count value increases in ascending order. To be specific, each time the terminal sends one message, the first count value carried in the packet gradually increases, for example, increases by 1 each time. For example, when the terminal sends a 1^{st} remote vehicle control instruction, the first count value is 1, when the terminal sends a 2^{nd} remote vehicle control instruction, the first count value is 2, and so on. After performing receiving and decryption, the telematics device determines whether a first count value obtained through current decryption is 1 greater than a first count value obtained through previous decryption. If the first count value obtained through the current decryption is 1 greater than the first count value obtained through the previous decryption, it indicates that remote vehicle control instruction is authorized. If the first count value obtained through the current decryption is not 1 greater than the first count value obtained through the previous decryption, it indicates that the remote vehicle control instruction is unauthorized.

In an example, the remote vehicle control instruction and the first count value are encrypted as a whole. In another example, the remote vehicle control instruction and the first count value are separately encrypted. To be specific, the remote vehicle control instruction and the first count value may be used as one message or data packet, or may be divided into different messages and data packets. However, after division, it needs to be ensured that the remote vehicle control instruction and the first count value can be associated with or correspond to each other.

In another possible implementation of this application, the terminal encrypts the remote vehicle control instruction without including the first count value. This can reduce a message size of the to-be-transmitted instruction and reduce a bandwidth requirement.

In an implementation of this application, the user triggers the remote vehicle control instruction through an application on the terminal. To be specific, the terminal performs step S37 in response to a vehicle control operation of the user in the application. The terminal encrypts the remote vehicle control instruction using a session generated through negotiation, to generate a ciphertext.

S38: The terminal sends the encrypted remote vehicle control instruction to the telematics device through the cloud; and the telematics device receives, through the cloud, the encrypted remote vehicle control instruction sent by the terminal.

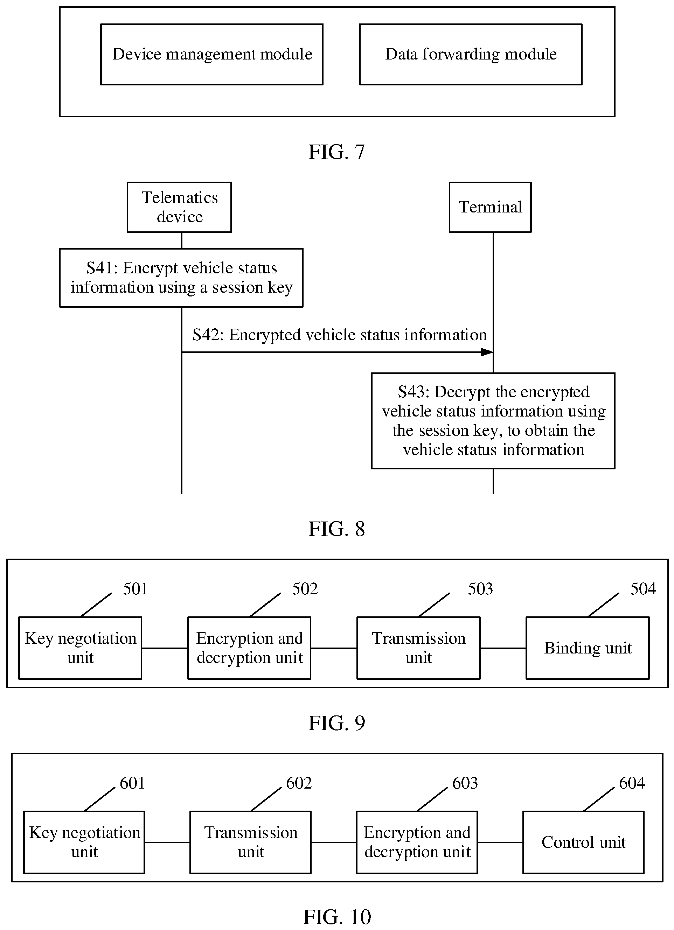

FIG. 7 is a diagram of modules of a cloud according to an embodiment of this application. Refer to FIG. 7. The cloud includes a device management module and a data forwarding module. The device management module is configured to obtain a binding relationship between a terminal and a telematics device, and determine, based on the binding relationship, a target device of received information, for example, a target telematics device or a target terminal. The data forwarding module is configured to transparently forward data to the target device. In this process, the cloud cannot decrypt or tamper with a message, thereby avoiding a vulnerability of controlling a vehicle by attacking the cloud.

Refer to FIG. 5. A transmission path of the encrypted remote vehicle control instruction is as follows: the terminal 10-the cloud 13-the telematics device 12.

S39: The telematics device decrypts the encrypted remote vehicle control instruction using the session key, to obtain the remote vehicle control instruction.

When the remote vehicle control instruction carries the first count value, the telematics device performs the decryption using the session key to obtain the remote vehicle control instruction and the first count value, and verifies the authority using the first count value.

Refer to FIG. 5. Step S39 may be performed by the second application of the telematics device 12.

S310: The telematics device controls the vehicle according to the remote vehicle control instruction.

The telematics device delivers the remote vehicle control instruction to a corresponding controller through a bus, to remotely control the vehicle, so as to implement functions such as remote start, air conditioner control, and seat adjustment of the vehicle. The bus may be a controller area network (controller area network, CAN) bus.

In a possible implementation of this application, after negotiating with the telematics device to determine the session key, the terminal always uses a same session key for information encryption. In this manner, a processing amount of determining, by the terminal and the telematics device, the key that needs to be used is small.

In another possible implementation of this application, after negotiating with the telematics device to determine the session key, the terminal periodically updates the used session key, thereby further improving security.

In an example, the terminal updates the session key in the following manner: The terminal periodically updates the session key with the telematics device through negotiation. In other words, the terminal periodically negotiates with the telematics device, and then uses a latest session key obtained through negotiation.

In another example, the terminal updates the session key in the following manner: The terminal negotiates with the telematics device to obtain a plurality of session keys; and the terminal periodically updates the used session key based on the plurality of session keys. In other words, the terminal negotiates with the telematics device to obtain the plurality of session keys, then selects a to-be-used session key from the plurality of session keys, and periodically changes the used session key. Certainly, in this example, the terminal may still periodically negotiate with the telematics device, but a difference from a 1^{st} example is that a plurality of session keys are obtained through negotiation each time, and then a session key is changed between two negotiation cycles.

In an implementation of this application, the negotiation cycle or a key change cycle may be set based on a security requirement and a computing power and bandwidth condition. A cycle length in the foregoing implementation is not limited in this application.

The vehicle control solution provided in this application includes two phases. In a 1^{st} phase, the key negotiation between the terminal and the telematics device is completed. In a 2^{nd} phase, transmission of the vehicle remote control instruction is completed.

In the 1^{st} phase, because the terminal and the telematics device cannot directly communicate with each other in an actual scenario, the head unit device needs to be used as a stepping stone, to complete establishment of the channel between the terminal and the telematics device. Information in a negotiation process is transmitted on the channel.

In this phase, the terminal and the telematics device implement the identity authentication using the certificates, and determine the authority of the public keys sent by peers, thereby avoiding a spoofing attack. Both the terminal and the telematics device store the session key, and the password cannot be reversely deduced from the session key. The password of the application terminal cannot be restored even if information in a terminal authentication database is stolen. Therefore, the application device cannot be spoofed for login.

During key negotiation, if the temporary public key is used for encrypted data transmission, plaintext data is not leaked in negotiation process even if a certificate-based long-term private key of the terminal or the telematics device is leaked.

In the 2^{nd} phase, because the cloud transparently forwards only the data, the attacker cannot control the vehicle through the cloud, thereby ensuring security of remote vehicle control. The count value is used as a time-varying parameter to prevent the replay attack. In addition, a session key update mechanism is established to further ensure security of the session key.

In this embodiment of this application, the terminal negotiates on the session key with the telematics device. Security of the session key obtained by first performing the binding and then performing negotiation can be ensured. When the remote vehicle control instruction is subsequently transmitted through the cloud, the session key obtained through negotiation is used for the encryption. In this way, the attacker cannot tamper with the vehicle control instruction even if the cloud is attacked, thereby ensuring security of the vehicle control method.

In this solution, the trust relationship between the terminal and the telematics device does not depend on the cloud, thereby remotely controlling the vehicle due to a cloud vulnerability. The identity authentication is implemented, and it is also ensured that the data is protected through an encryption algorithm and is not tampered with during transmission.

In this embodiment of this application, in addition to the remote vehicle control instruction, vehicle status information may be further transmitted between the terminal and the telematics device. With reference to FIG. 8, the following provides example descriptions.

FIG. 8 is a flowchart of a vehicle control method according to an embodiment of this application. The method is applied to the foregoing vehicle. The method may be jointly performed by the terminal and the telematics device in the system architecture shown in FIG. 1. Because a key negotiation phase is the same as that in the method shown in FIG. 4, this part is omitted in FIG. 8. As shown in FIG. 8, the method includes the following steps.

S41: The telematics device encrypts vehicle status information using a session key.

In an implementation of this application, the telematics device may periodically perform S41, or S41 is triggered based on an operation of a user on the terminal or a head unit device.

S42: The telematics device sends the encrypted vehicle status information to the terminal through a cloud; and the terminal receives, through the cloud, the encrypted vehicle status information sent by the telematics device.

In a possible implementation of this application, the terminal receives, through the cloud, encrypted vehicle status information and second count value that are sent by the telematics device, where the second count value is a count value of the vehicle status information.

In an example, the vehicle status information and the second count value are encrypted as a whole. In another example, the vehicle status information and the second count value are separately encrypted. To be specific, the vehicle status information and the second count value may be used as one message or data packet, or may be divided into different messages and data packets. However, after division, it needs to be ensured that the vehicle status information and the second count value can be associated with or correspond to each other.

In another possible implementation of this application, the telematics device encrypts the vehicle status information without including the second count value. This can reduce a message size of the to-be-transmitted information and reduce a bandwidth requirement.

S43: The terminal decrypts the encrypted vehicle status information using the session key, to obtain the vehicle status information.

When receiving the encrypted vehicle status information and second count value, the terminal decrypts the encrypted vehicle status information and second count value using the session key, to obtain the vehicle status information and the second count value. The terminal verifies authority of the vehicle status information based on the second count value. If the vehicle status information is authorized, the vehicle status information is stored. If the vehicle status information is unauthorized, the vehicle status information is discarded.

In this implementation, the second count value is encrypted together with the vehicle status information, and then the encrypted vehicle status information and second count value are sent together. In this way, when receiving the vehicle status information, the terminal performs the authority verification based on the second count value received together. The second count value gradually increases with a number of pieces of vehicle status information sent by the telematics device to the terminal. Therefore, whether the vehicle status information is normal information or a replay attack can be determined by verifying the second count value, thereby improving security.

For details of steps S41 to S43, refer to steps S37 to S39.

FIG. 9 is a block diagram of a vehicle control apparatus according to an embodiment of this application. The vehicle control apparatus may be implemented as an entirety or a part of a terminal using software, hardware, or a combination thereof. The vehicle control apparatus may include a key negotiation unit 501, an encryption and decryption unit 502, and a transmission unit 503.

The key negotiation unit 501 is configured to negotiate with a telematics device of a vehicle through a first link to determine a session key.

The encryption and decryption unit 502 is configured to encrypt a remote vehicle control instruction using the session key.

The transmission unit 503 is configured to send the encrypted remote vehicle control instruction to the telematics device through a second link, where the second link is different from the first link.

Optionally, the first link includes a link between the apparatus and a head unit device of the vehicle and a link between the head unit device and the telematics device; or
the first link includes a link between the apparatus and the telematics device.

Optionally, when the first link includes the link between the apparatus and the head unit device and the link between the head unit device and the telematics device, the apparatus further includes a binding unit 504, configured to determine a symmetric key between the apparatus and the head unit device of the vehicle.

The encryption and decryption unit 502 is further configured to encrypt a binding request using the symmetric key.

The transmission unit 503 is further configured to: send the encrypted binding request to the head unit device, so that the head unit device decrypts the encrypted binding request and then sends the decrypted binding request to the telematics device; and receive a binding response encrypted and forwarded by the head unit device, where the binding response is fed back by the telematics device to the head unit device.

The binding unit 504 is further configured to decrypt the encrypted binding response using the symmetric key, to complete binding.

Optionally, the transmission unit 503 is further configured to obtain a secret factor that is the same as that of the head unit device.

The binding unit 504 is configured to determine the symmetric key based on the secret factor.

Optionally, the encryption and decryption unit 502 is configured to encrypt the remote vehicle control instruction and a first count value using the session key, so that the telematics device verifies authority of the remote vehicle control instruction based on the first count value, where the first count value is a count value of the remote vehicle control instruction.

Optionally, the transmission unit 503 is further configured to receive, through the second link, encrypted vehicle status information and second count value that are sent by the telematics device, where the second count value is a count value of the vehicle status information.

The encryption and decryption unit 502 is further configured to: decrypt the encrypted vehicle status information and second count value using the session key, to obtain the vehicle status information and the second count value; and verify authority of the vehicle status information based on the second count value.

Optionally, the second link includes a link between the apparatus and a cloud and a link between the cloud and the telematics device; or
the second link includes a link between the apparatus and the telematics device.

Optionally, the key negotiation unit 501 is further configured to periodically update the session key with the telematics device through negotiation; or
negotiate with the telematics device to obtain a plurality of session keys, where the key negotiation unit 501 is further configured to periodically update the used session key based on the plurality of session keys.

It should be noted that, when the vehicle control apparatus provided in the foregoing embodiment performs vehicle control, division into the foregoing functional units is used merely as an example for illustration. During actual application, the foregoing functions may be allocated to different functional units and implemented based on a requirement. To be specific, an inner structure of a device is divided into different functional units, to implement all or a part of the functions described above. In addition, the vehicle control apparatus provided in the foregoing embodiment and the vehicle control method embodiments pertain to a same concept. For a specific implementation process of the apparatus, refer to the method embodiments. Details are not described herein again.

FIG. 10 is a block diagram of a vehicle control apparatus according to an embodiment of this application. The vehicle control apparatus may be implemented as an entirety or a part of a telematics device using software, hardware, or a combination thereof. The vehicle control apparatus may include a key negotiation unit 601, a transmission unit 602, an encryption and decryption unit 603, and a control unit 604.

The key negotiation unit 601 is configured to negotiate with a terminal through a first link to determine a session key.

The transmission unit 602 is configured to receive, through a second link, an encrypted remote vehicle control instruction sent by the terminal, where the second link is different from the first link.

The encryption and decryption unit 603 is configured to decrypt the encrypted remote vehicle control instruction using the session key, to obtain the remote vehicle control instruction.

The control unit 604 is configured to control a vehicle according to the remote vehicle control instruction.

Optionally, the first link includes a link between the terminal and a head unit device of the vehicle and a link between the head unit device and the apparatus; or
the first link includes a link between the terminal and the apparatus.

Optionally, when the first link includes the link between the terminal and the head unit device and the link between the head unit device and the apparatus, the transmission unit 602 is further configured to: receive a binding request sent by the terminal through the head unit device of the vehicle; and send a binding response to the head unit device, so that the head unit device encrypts and forwards the binding response to the terminal, to complete binding.

Optionally, the transmission unit 602 is configured to receive, through the second link, encrypted remote vehicle control instruction and first count value that are sent by the terminal, where the first count value is a count value of the remote vehicle control instruction.

The encryption and decryption unit 603 is configured to verify authority of the remote vehicle control instruction based on the first count value.

Optionally, the encryption and decryption unit 603 is further configured to encrypt vehicle status information and a second count value using the session key, so that the terminal verifies authority of the vehicle status information based on the second count value, where the second count value is a count value of the vehicle status information. The transmission unit 602 is further configured to send the encrypted vehicle status information and second count value to the terminal through the second link.

Optionally, the second link includes a link between the terminal and a cloud and a link between the cloud and the apparatus; or
the second link includes a link between the terminal and the apparatus.

Optionally, the key negotiation unit 601 is further configured to periodically update the session key with the terminal through negotiation; or
negotiate with the terminal to obtain a plurality of session keys, where the key negotiation unit 601 is further configured to periodically update the used session key based on the plurality of session keys.

It should be noted that, when the vehicle control apparatus provided in the foregoing embodiment performs vehicle control, division into the foregoing functional units is used merely as an example for illustration. During actual application, the foregoing functions may be allocated to different functional units and implemented based on a requirement. To be specific, an inner structure of a device is divided into different functional units, to implement all or a part of the functions described above. In addition, the vehicle control apparatus provided in the foregoing embodiment and the vehicle control method embodiments pertain to a same concept. For a specific implementation process of the apparatus, refer to the method embodiments. Details are not described herein again.

An embodiment of this application further provides a vehicle. The vehicle may include an automatic parking control apparatus shown in FIG. 10.

Optionally, the vehicle further includes another component or system connected to the apparatus, for example, includes a central display screen, an instrument screen, a cockpit speaker, a motor controller, and a parking controller.

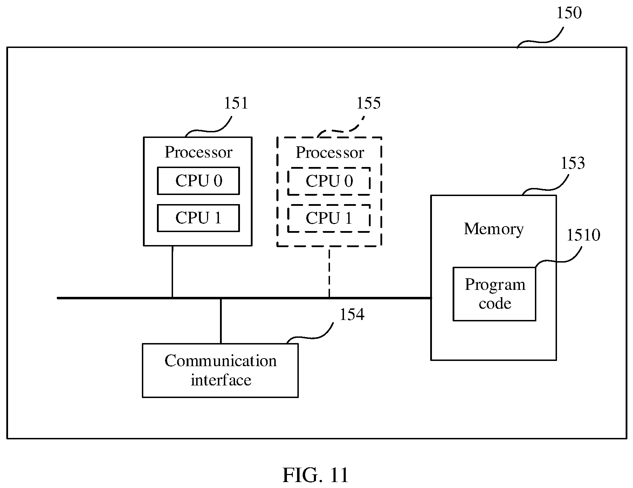

FIG. 11 is a diagram of a structure of a device 150 according to an embodiment of this application. The device 150 may be a terminal or a telematics device. The device 150 shown in FIG. 11 is configured to perform the operations in the vehicle control method shown in any one of FIG. 2 to FIG. 8. The device 150 may be implemented using a general bus architecture.

As shown in FIG. 11, the device 150 includes at least one processor 151, a memory 153, and at least one communication interface 154.

The processor 151 is, for example, a general-purpose central processing unit (central processing unit, CPU), a digital signal processor (digital signal processor, DSP), a network processor (network processor, NP), a data processing unit (Data Processing Unit, DPU), a microprocessor, or one or more integrated circuits configured to implement the solutions of this application. For example, the processor 151 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to the content disclosed in embodiments of this application. The processor may alternatively be a combination for implementing a computing function, for example, a combination including one or more microprocessors, or a combination of a DSP and a microprocessor.

Optionally, the device 150 further includes a bus. The bus is configured to transfer information between components of the device 150. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one bold line is used for representation in FIG. 11, but this does not mean that there is only one bus or only one type of bus.

The memory 153 is, for example, a read-only memory (read-only memory, ROM) or another type of static storage device that can store static information and instructions, is, for another example, a random access memory (random access memory, RAM) or another type of dynamic storage device that can store information and instructions, is, for another example, an electrically erasable programmable read-only memory (electrically erasable programmable read-only memory, EEPROM), a compact disc read-only memory (compact disc read-only memory, CD-ROM) or another compact disc storage, an optical disk storage (including a compact optical disc, a laser disc, an optical disc, a digital versatile disc, a Blu-ray disc, or the like), a magnetic disk storage medium or another magnetic storage device, or is any other medium that can be configured to carry or store expected program code in a form of an instruction structure or a data structure and that can be accessed by a computer, but is not limited thereto. For example, the memory 153 exists independently, and is connected to the processor 151 through the bus. The memory 153 may alternatively be integrated with the processor 151.

The communication interface 154 is any apparatus like a transceiver, and is configured to communicate with another device or a communication network. The communication network may be an Ethernet, a radio access network (RAN), a wireless local area network (wireless local area network, WLAN), or the like. The communication interface 154 may include a wired communication interface, and may further include a wireless communication interface. Specifically, the communication interface 154 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 154 may be used by the device 150 to communicate with another device.

During specific implementation, in an embodiment, the processor 151 may include one or more CPUs, for example, a CPU 0 and a CPU 1 shown in FIG. 11. Each of these processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the device 150 may include a plurality of processors, for example, the processor 151 and a processor 155 shown in FIG. 11. Each of these processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the device 150 may further include an output device and an input device. The output device communicates with the processor 151, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, or a projector (projector). The input device communicates with the processor 151, and may receive a user input in a plurality of manners. For example, the input device may be a mouse, a keyboard, a touchscreen device, or a sensor device.

In some embodiments, the memory 153 is configured to store program code 1510 for executing the solutions of this application. The processor 151 may execute the program code 1510 stored in the memory 153. To be specific, the device 150 may execute the program code 1510 in the memory 153 through the processor 151, to implement the methods provided in the method embodiments. The program code 1510 may include one or more software modules. Optionally, the processor 151 may also store program code or instructions for executing the solutions of this application.

In a specific embodiment, the device 150 in this embodiment of this application may correspond to a controller in the foregoing method embodiments. The processor 151 in the device 150 reads instructions in the memory 153, so that the device 150 shown in FIG. 11 can perform all or a part of operations performed by the controller.

Specifically, the processor 151 is configured to: negotiate with a telematics device of a vehicle through a first link to determine a session key, encrypt a remote vehicle control instruction using the session key, and send the encrypted remote vehicle control instruction to the telematics device through a second link, where the second link is different from the first link.

Alternatively, the processor 151 is configured to: negotiate with a terminal through a first link to determine a session key; receive, through a second link, an encrypted remote vehicle control instruction sent by the terminal, where the second link is different from the first link; decrypt the encrypted remote vehicle control instruction using the session key, to obtain the remote vehicle control instruction; and control a vehicle according to the remote vehicle control instruction.

For brevity, another optional implementation is not described herein again.

The steps of the vehicle control method shown in any one of FIG. 2 to FIG. 8 are completed through an integrated logic circuit of hardware in the processor of the device 150 or through instructions in a form of software. The steps of the methods disclosed with reference to embodiments of this application may be directly performed by a hardware processor, or may be performed by a combination of the hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps of the foregoing methods in combination with the hardware in the processor. To avoid repetition, details are not described herein again.

An embodiment of this application further provides a chip, including an input interface, an output interface, a processor, and a memory. The input interface, the output interface, the processor, and the memory are connected to each other through an internal connection path. The processor is configured to execute code in the memory. When the code is executed, the processor is configured to perform any one of the foregoing vehicle control methods.

It should be understood that the processor may be a CPU, or may be another general-purpose processor, a DSP, an ASIC, an FPGA or another programmable logic device, a discrete gate or a transistor logic device, a discrete hardware component, or the like. The general-purpose processor may be a microprocessor, any conventional processor, or the like. It should be noted that the processor may be a processor that supports an ARM architecture.

Further, in an optional embodiment, there are one or more processors and one or more memories. Optionally, the memory may be integrated with the processor, or the memory and the processor may be separately disposed. The memory may include a read-only memory and a random access memory, and provide instructions and data to the processor. The memory may further include a non-volatile random access memory. For example, the memory may further store a reference block and a target block.

The memory may be a volatile memory or a non-volatile memory, or may include both the volatile memory and the non-volatile memory. The non-volatile memory may be a ROM, a PROM, an EPROM, an EEPROM, or a flash memory. The volatile memory may be a RAM, and is used as an external cache. By way of an example but not limitative descriptions, many forms of RAMs may be used, for example, an SRAM, a DRAM, an SDRAM, a DDR SDRAM, an ESDRAM, an SLDRAM, and a DR RAM.

An embodiment of this application further provides a computer-readable storage medium. The computer-readable storage medium stores computer instructions. When the computer instructions stored in the computer-readable storage medium are executed by an electronic device, the electronic device is enabled to perform the vehicle control methods provided above.

An embodiment of this application further provides a computer program product including instructions. When the computer program product runs on an electronic device, the electronic device is enabled to perform the vehicle control methods provided above.

The foregoing embodiments may be all or partially implemented using software, hardware, firmware, or any combination thereof. When being implemented using the software, the foregoing embodiments may be all or partially implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

An embodiment of this application further provides a vehicle. The vehicle includes a range extender and an electronic device. The electronic device is connected to the range extender. The electronic device is configured to implement the vehicle control methods provided above.

A person of ordinary skill in the art may understand that all or a part of the steps of the foregoing embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

Unless otherwise defined, a technical term or a scientific term used herein should have a general meaning understood by a person of ordinary skill in the art of this application. In the specification and claims of this application, "first", "second", "third", and a similar term do not indicate any order, number, or importance, but are used merely to distinguish between different components. Likewise, a term like "one" or "a/an" does not indicate a number limitation, but indicates at least one. A term like "include" or "contain" means that an element or object before the "include" or "comprise" encompasses an element or object and an equivalent thereof listed after the "include" or "comprise", and another element or object is not excluded.

The foregoing descriptions are merely an embodiment of this application, but are not intended to limit this application. Any modification, equivalent replacement, improvement, or the like made within the spirit and principle of this application shall fall within the protection scope of this application.

## Claims

1. A vehicle control method, wherein the method comprises:
negotiating, by a terminal, with a telematics device of a vehicle through a first link to determine a session key;
encrypting, by the terminal, a remote vehicle control instruction using the session key; and
sending, by the terminal, the encrypted remote vehicle control instruction to the telematics device through a second link, wherein the second link is different from the first link.

2. The method according to claim 1, wherein the first link comprises a link between the terminal and a head unit device of the vehicle and a link between the head unit device and the telematics device; or
the first link comprises a link between the terminal and the telematics device.

3. The method according to claim 2, wherein when the first link comprises the link between the terminal and the head unit device and the link between the head unit device and the telematics device, the method further comprises:
determining, by the terminal, a symmetric key between the terminal and the head unit device;
encrypting, by the terminal, a binding request using the symmetric key;
sending, by the terminal, the encrypted binding request to the head unit device, so that the head unit device decrypts the encrypted binding request and then sends the decrypted binding request to the telematics device;
receiving, by the terminal, a binding response encrypted and forwarded by the head unit device, wherein the binding response is fed back by the telematics device to the head unit device; and
decrypting, by the terminal, the encrypted binding response using the symmetric key, to complete binding.

4. The method according to claim 3, wherein determining, by the terminal, the symmetric key between the terminal and the head unit device comprises:
obtaining, by the terminal, a secret factor that is the same as that of the head unit device; and
determining, by the terminal, the symmetric key based on the secret factor.

5. The method according to any one of claims 1 to 4, wherein the second link comprises a link between the terminal and a cloud and a link between the cloud and the telematics device; or
the second link comprises a link between the terminal and the telematics device.

6. The method according to any one of claims 1 to 5, wherein the method further comprises: periodically updating, by the terminal, the session key with the telematics device through negotiation; or
negotiating, by the terminal, with the telematics device to obtain a plurality of session keys, wherein the method further comprises:
periodically updating, by the terminal, the used session key based on the plurality of session keys.

7. A vehicle control method, wherein the vehicle comprises a telematics device, and the method comprises:
negotiating, by the telematics device, with a terminal through a first link to determine a session key;
receiving, by the telematics device through a second link, an encrypted remote vehicle control instruction sent by the terminal, wherein the second link is different from the first link;
decrypting, by the telematics device, the encrypted remote vehicle control instruction using the session key, to obtain the remote vehicle control instruction; and
controlling, by the telematics device, the vehicle according to the remote vehicle control instruction.

8. The method according to claim 7, wherein the first link comprises a link between the terminal and a head unit device of the vehicle and a link between the head unit device and the telematics device; or
the first link comprises a link between the terminal and the telematics device.

9. The method according to claim 8, wherein when the first link comprises the link between the terminal and the head unit device and the link between the head unit device and the telematics device, the method further comprises:
receiving, by the telematics device, a binding request sent by the terminal through the head unit device; and
sending, by the telematics device, a binding response to the head unit device, so that the head unit device encrypts and forwards the binding response to the terminal, to complete binding.

10. The method according to any one of claims 7 to 9, wherein the second link comprises a link between the terminal and a cloud and a link between the cloud and the telematics device; or
the second link comprises a link between the terminal and the telematics device.

11. The method according to any one of claims 7 to 10, wherein the method further comprises:
periodically updating, by the telematics device, the session key with the terminal through negotiation; or
negotiating, by the telematics device with the terminal to obtain a plurality of session keys, wherein the method further comprises:
periodically updating, by the telematics device, the used session key based on the plurality of session keys.

12. A vehicle control apparatus, wherein the apparatus comprises:
a key negotiation unit, configured to negotiate with a telematics device of a vehicle through a first link to determine a session key;
an encryption and decryption unit, configured to encrypt a remote vehicle control instruction using the session key; and
a transmission unit, configured to send the encrypted remote vehicle control instruction to the telematics device through a second link, wherein the second link is different from the first link.

13. The apparatus according to claim 12, wherein the first link comprises a link between the apparatus and a head unit device of the vehicle and a link between the head unit device and the telematics device; or
the first link comprises a link between the apparatus and the telematics device.

14. The apparatus according to claim 13, wherein when the first link comprises the link between the apparatus and the head unit device and the link between the head unit device and the telematics device, the apparatus further comprises a binding unit, configured to determine a symmetric key between the apparatus and the head unit device;
the encryption and decryption unit is further configured to encrypt a binding request using the symmetric key;
the transmission unit is further configured to: send the encrypted binding request to the head unit device, so that the head unit device decrypts the encrypted binding request and then sends the decrypted binding request to the telematics device; and receive a binding response encrypted and forwarded by the head unit device, wherein the binding response is fed back by the telematics device to the head unit device; and
the binding unit is further configured to decrypt the encrypted binding response using the symmetric key, to complete binding.

15. The apparatus according to claim 14, wherein the transmission unit is further configured to obtain a secret factor that is the same as that of the head unit device; and
the binding unit is configured to determine the symmetric key based on the secret factor.

16. The apparatus according to any one of claims 12 to 15, wherein the second link comprises a link between the apparatus and a cloud and a link between the cloud and the telematics device; or
the second link comprises the link between the apparatus and the telematics device.

17. The apparatus according to any one of claims 12 to 16, wherein the key negotiation unit is further configured to periodically update the session key with the telematics device through negotiation; or
negotiate with the telematics device to obtain a plurality of session keys, wherein the key negotiation unit is further configured to periodically update the used session key based on the plurality of session keys.

18. A vehicle control apparatus, wherein the apparatus comprises:
a key negotiation unit, configured to negotiate with a terminal through a first link to determine a session key;
a transmission unit, configured to receive, through a second link, an encrypted remote vehicle control instruction sent by the terminal, wherein the second link is different from the first link;
an encryption and decryption unit, configured to decrypt the encrypted remote vehicle control instruction using the session key, to obtain the remote vehicle control instruction; and
a control unit, configured to control a vehicle according to the remote vehicle control instruction.

19. The apparatus according to claim 18, wherein the first link comprises a link between the terminal and a head unit device of the vehicle and a link between the head unit device and the apparatus; or
the first link comprises a link between the terminal and the apparatus.

20. The apparatus according to claim 19, wherein when the first link comprises the link between the terminal and the head unit device and the link between the head unit device and the apparatus, the transmission unit is further configured to: receive a binding request sent by the terminal through the head unit device; and send a binding response to the head unit device, so that the head unit device encrypts and forwards the binding response to the terminal, to complete binding.

21. The apparatus according to any one of claims 18 to 20, wherein the second link comprises a link between the terminal and a cloud and a link between the cloud and the apparatus; or
the second link comprises the link between the terminal and the apparatus.

22. The apparatus according to any one of claims 18 to 21, wherein the key negotiation unit is further configured to periodically update the session key with the terminal through negotiation; or
negotiate with the terminal to obtain a plurality of session keys, wherein the key negotiation unit is further configured to periodically update the used session key based on the plurality of session keys.

23. A terminal, wherein the terminal comprises a processor and a memory, the memory is configured to store a software program, and the processor runs or executes the software program stored in the memory, to enable the terminal to implement the method according to any one of claims 1 to 6.

24. A telematics device, wherein the telematics device comprises a processor and a memory, the memory is configured to store a software program, and the processor runs or executes the software program stored in the memory, to enable the telematics device to implement the method according to any one of claims 7 to 11.

25. A vehicle control system, wherein the system comprises the terminal according to claim 23 and the telematics device according to claim 24.

26. A computer-readable storage medium, wherein the computer-readable storage medium is configured to store program code to be executed by a processor, and the program code comprises instructions used to implement the method according to any one of claims 1 to 11.

27. A computer program product, comprising program code, wherein when a computer runs the computer program product, the computer is enabled to perform the method according to any one of claims 1 to 11.

28. A vehicle, wherein the vehicle comprises the vehicle control apparatus according to any one of claims 18 to 22.
